# EUROPÄISCHE PATENTSCHRIFT

(11) **EP 0 591 370 B1**
(45) Veröffentlichungstag und Bekanntmachung des Hinweises auf die Patenterteilung: **26.07.1995**
(21) Anmeldenummer: 92913895.6
(22) Anmeldetag: 24.06.1992
(51) Int. Cl.: C01F 7/00

(54) **VERFAHREN ZUR HERSTELLUNG SULFATHALTIGER BASISCHER POLYALUMINIUMCHLORID-LÖSUNGEN**
METHOD FOR THE PREPARATION OF SULPHATE-CONTAINING BASIC POLY(ALUMINIUM CHLORIDE) SOLUTIONS
PROCEDE DE PREPARATION DE SOLUTIONS BASIQUES SULFATEES DE CHLORURE DE POLYALUMINIUM

(30) Priorität: 27.06.1991 DE 4121276
(43) Veröffentlichungstag der Anmeldung: 13.04.1994
(73) Patentinhaber: METALLGESELLSCHAFT Aktiengesellschaft, 60015 Frankfurt (DE)
(72) Erfinder: HAAKE, Gerhard, D-9200 Freiberg (DE); GEILER, Gunter, D-9200 Freiberg (DE); HAUPT, Frank, D-9200 Freiberg (DE)
(86) Internationale Anmeldenummer: EP9201417
(87) Internationale Veröffentlichungsnummer: WO9300295

(56) Entgegenhaltungen:
- DD-A- 211 543
- DE-A- 1 907 359
- FR-A- 2 289 447
- GB-A- 1 347 413
- LU-A- 53 506

## Beschreibung

Die Erfindung betrifft ein Verfahren zur Herstellung sulfathaltiger basischer Polyaluminiumchlorid-Lösungen. Derartige Lösungen werden bei der Behandlung von Wasser und Abwasser als Flockungsmittel verwendet.

Gegenüber den seit langem als Flockungsmittel verwendeten neutralen Aluminiumsalzen haben sich seit einiger Zeit insbesondere basische Aluminiumchloride als vorteilhafter erwiesen. Bei dem Einsatz basischer Aluminiumchloride erfolgt die Flockung und damit die Ausfällung der im Wasser enthaltenen Schadstoffe in einem relativ weiten pH-Bereich und die gebildeten Flocken sind wegen ihrer Größe leicht separierbar. Eine weitere Verbesserung der Flockung konnte durch die Einführung mehrwertiger Anionen, vorzugsweise Sulfationen, in das basische Aluminiumchlorid erreicht werden, denn sulfathaltige, basische Aluminiumchloride hydrolisieren schneller als basische Aluminiumchloride.

Aus der DE-B-1 907 359 und der DE-C-2 547 695 sind Verfahren zur Herstellung sulfathaltiger basischer Aluminiumchlorid-Lösungen bekannt, bei denen basischen Aluminiumchlorid-Lösungen Sulfationen zugesetzt werden, wobei gemäß der DE-B-1 907 359 die Basizität der Lösungen durch den Zusatz von Kalzium- oder Bariumverbindungen eingestellt wird. Die bekannten Verfahren haben den Nachteil, daß ein Teil der Sulfationen als CaSO₄ oder BaSO₄ ausfällt und daß diese schwerlöslichen Verbindungen als nicht wiederverwendbare Nebenprodukte abgetrennt werden müssen. Außerdem neigen die nach den bekannten Verfahren hergestellten Lösungen zur Instabilität, die sich dadurch manifestiert, daß es zu unerwünschten Ausfällungen oder Aussalzungen schwerlöslicher Aluminiumverbindungen kommt, was mit einer starken Abnahme der Flockungswirksamkeit verbunden ist.

Der Erfindung liegt die Aufgabe zugrunde, ein Verfahren zur Herstellung sulfathaltiger, basischer Polyaluminiumchlorid-Lösungen zu schaffen, das Produkte mit hoher Flockungswirksamkeit und hoher Stabilität erzeugt und unter Vermeidung von Abfallprodukten arbeitet. Außerdem soll die Basizität der Lösungen innerhalb weiter Grenzen einstellbar sein, wobei Instabilitäten zu vermeiden sind.

Die der Erfindung zugrundeliegende Aufgabe wird durch den Gegenstand des Anspruchs 1 gelöst. Die Erfindung sieht dabei vor, daß aluminiumhaltige Stoffe mit Salzsäure aufgeschlossen werden, daß der unlösliche Rückstand aus der Aufschlußlösung abfiltriert wird, daß die feststofffreie Aufschlußlösung anschließend eingedampft wird, daß aus der eingedampften Aufschlußlösung durch Kristallisation AlCl₃ x 6 H₂O gewonnen wird, daß das AlCl₃ x 6 H₂O bei 150 bis 200°C durch thermische Zersetzung zu einem festen, basischen Aluminiumchlorid umgewandelt wird, daß das feste basische Aluminiumchlorid in wäßrige Schwefelsäure eingetragen sowie unter Bildung von Al(OH)ₓCl_{y}(SO₄)_{z} gelöst wird und daß schließlich die basische Aluminiumchloridsulfat-Lösung während 1 bis 3 Stunden bei 40 bis 70°C wärmebehandelt wird.

Als aluminiumhaltiger Stoff wird beispielsweise Tonerdehydrat verwendet, während die für den Aufschluß verwendete Salzsäure einen HCl-Gehalt von 15 bis 35 % hat. Die Gewinnung des AlCl₃ x 6 H₂O kann durch ein- oder mehrstufige Kristallisation erfolgen, wobei ein Kristallisat mit einer für die nachfolgende thermische Teilzersetzung optimalen Korngröße sowie mit einer geringen Restfeuchte erzeugt werden muß. Die Abtrennung des Kristallisats von der in den Kristallisationsprozeß zurückgehenden Mutterlösung wird zweckmäßig in einer Zentrifuge durchgeführt. Das durch thermische Zersetzung erzeugte basische Aluminiumchlorid muß eine hohe Löslichkeit und eine optimale Basizität (Mol-Verhältnis von OH : Al) aufweisen. Die bei der thermischen Zersetzung anfallenden HCl-haltigen Spaltgase werden zu wäßriger Salzsäure umgesetzt, und diese wird erneut zum Aufschluß der aluminiumhaltigen Stoffe verwendet. Das beim Lösen des basischen Aluminiumchlorids in wäßriger Schwefelsäure gebildete Al(OH)ₓCl_{y}(SO₄)_{z} liegt nicht nur in monomerer, sondern auch in oligomerer Form vor; aber erst während der Wärmebehandlung wird der gewünschte Polymerisationsgrad erreicht.

Mit der Erfindung wird in vorteilhafter Weise erreicht, daß als Rohstoffe aluminiumhaltige Substanzen verwendet werden, die bisher als Abfälle verworfen oder mit geringem technisch-wirtschaftlichem Effekt verwertet werden mußten. Außerdem ist das erfindungsgemäße Verfahren ein nahezu geschlossener Prozeß, in dem die Erzeugung von Neben- bzw. Abfallprodukten weitgehend ausgeschlossen ist. Insbesondere wird die für den Aufschluß der Rohstoffe benötigte Salzsäure bei der thermischen Zersetzung des AlCl₃ x 6 H₂O teilweise zurückgewonnen; die Salzsäure wird also vorteilhaft im Kreislauf geführt. Zudem werden zur Einstellung der erforderlichen Basizität keine Chemikalien benötigt, die ggf. als Abfallprodukte zu entsorgen wären. Schließlich haben die nach dem erfindungsgemäßen Verfahren hergestellten Lösungen außerordentlich gute Gebrauchseigenschaften, was insbesondere auf die Erzeugung eines festen basischen Zwischenprodukts, den Eintrag des basischen Zwischenprodukts in wäßrige Schwefelsäure sowie auf die Wärmebehandlung der Aluminiumchloridsulfat-Lösung zurückzuführen ist.

Nach der Erfindung ist vorgesehen, daß als aluminiumhaltiger Stoff aluminiumhaltige Abfallprodukte verwendet werden. Beispielsweise eignen sich Abfallösungen aus der chemischen Industrie, wie sie beim Ätzen von Aluminium oder bei AlCl₃-katalysierten organischen Synthesen anfallen. Ferner ist nach der Erfindung vorgesehen, daß die feststofffreie Aufschlußlösung bis zu einem AlCl₃-Gehalt von ca. 30 Gew.% eingedampft wird und danach eine optimale Kristallisation des AlCl₃ x 6 H₂O erfolgt. Nach der Erfindung ist es besonders vorteilhaft, wenn das AlCl₃ x 6 H₂O einen mittleren Teilchendurchmesser d₅₀ zwischen 250 und 450 »m und eine Restfeuchte von 3 bis 10 Gew.% hat. Ferner ist nach der Erfindung vorgesehen, daß das feste basische Aluminiumchlorid eine Basizität - also das Molverhältnis von OH : Al = 1,35 : 1 bis 2,25 : 1 aufweist. Hierdurch erhält das basische Aluminiumchlorid eine gute Löslichkeit, denn 92 bis 98 Gew.% dieses Produkts sind in Wasser bzw. in wäßriger Schwefelsäure löslich. Erfindungsgemäß ist vorgesehen, daß das basische Aluminiumchlorid in Wasser gelöst wird, bevor es in die wäßrige Schwefelsäure eingetragen wird. Ein besonders gutes Lösungsverhalten wird erreicht, wenn gemäß der Erfindung das feste basische Aluminiumchlorid in wäßriger Schwefelsäure oder in Wasser bei 40 bis 70°C gelöst wird. Erfindungsgemäß ist auch vorgesehen, daß die Aluminiumkonzentration in der basischen Aluminiumchloridsulfat-Lösung 3 bis 10 Gew.%, vorzugsweise 5 bis 7,5 Gew.%, beträgt. Das erfindungsgemäße Verfahren liefert Lösungen mit besonders vorteilhaften Eigenschaften, da die basische Aluminiumchloridsulfat-Lösung nach der Wärmebehandlung eine Basizität von OH : Al = 1,05 : 1 bis 1,95 : 1 und einen Sulfatgehalt von 1 bis 6 Gew.%, vorzugsweise 2 bis 4 Gew.%, hat. Die Eigenschaften des festen basischen Aluminiumchlorids sind besonders gleichbleibend und gut, wenn die thermische Zersetzung des AlCl₃ x 6 H₂O in einer Wirbelschicht erfolgt, wobei es vorteilhaft ist, daS das AlCl₃ x 6 H₂O-Kristallisat eine Teilchengröße von 250 bis 450 »m hat. Schließlich ist es in einigen Fällen erforderlich, daß die basische Aluminiumchloridsulfat-Lösung nach der Wärmebehandlung filtriert wird, um eventuell vorhandene Feststoffe abzutrennen, die als Rohstoffe in den Verfahrenskreislauf zurückgeführt werden können.

Der Gegenstand der Erfindung wird nachfolgend anhand von Ausführungsbeispielen ausführlich erläutert.

### Beispiel 1

Durch Behandlung von Tonerdehydrat mit Salzsäure wurde eine aluminiumchloridhaltige Aufschlußlösung hergestellt, die nach Abtrennung des unlöslichen Rückstands durch Filtration bis auf einen AlCl₃-Gehalt von 30 Gew.% eingedampft und anschließend in einer Menge von 500 kg/h einem Suspensions-Umlaufkristallisator zugeführt wurde. Dem Kristallisator wurde eine Kristallisat-Suspension entnommen und in eine Zentrifuge geführt, die ein aus AlCl₃ x 6 H₂O bestehendes Kristallisat mit einer Restfeuchte von ca. 6 Gew.% abgab. Anschließend wurde dieses Material in einem Wirbelschichtreaktor bei 170 bis 180°C bis zu einer Basizität von OH : Al = 1,8 : 1 zersetzt. Das Produkt hatte nach der Entnahme aus dem Wirbelschichtreaktor einen H₂O-Gehalt von 3,9 Gew.% sowie einen mittleren Teilchendurchmesser d₅₀ von 360 »m, wobei 87 % des Materials einen Teilchendurchmesser im Bereich von 200 bis 500 »m aufwiesen. Das feste basische Aluminiumchlorid hatte eine ausgezeichnete Löslichkeit, denn innerhalb von 10 Minuten konnte ein Gewichtsteil Feststoff in 25 Gewichtsteilen Wasser bei ca. 100°C zu 99,8 % gelöst werden.

6 kg des festen basischen Aluminiumchlorids wurden in eine wäßrige Schwefelsäure bei 60°C eingetragen und gelöst. Es resultierte eine basische Aluminiumchloridsulfat-Lösung, die folgende Zusammensetzung hatte: Al³⁺ = 5,5 Gew.%, Cl⁻ = 8,7 Gew.%, SO₄²⁻ = 2,9 Gew.%, Rest Wasser. Anschließend wurde die Lösung unter Rühren 2 Stunden bei 60°C wärmebehandelt: nach Abschluß der Wärmebehandlung lag die Basizität der Lösung OH : Al bei 1,5 : 1. Aus der sulfathaltigen Polyaluminiumchlorid-Lösung wurde ein unlöslicher Rückstand in einer Menge von 0,5 Gew.%, bezogen auf das feste, basische Aluminiumchlorid, abfiltriert.

Nach der Herstellung zeigte die basische, sulfathaltige Polyaluminiumchlorid-Lösung eine sehr gute Stabilität, denn ihre Trübung betrug nach einem Tag 1,4 TE/F und nach 30 Tagen 3,7 TE/F (TE/F = Trübungseinheiten bezogen auf Formazin gem. DIN 38404 C2).

### Beispiel 2

Nach den im Beispiel 1 genannten Verfahrensbedingungen wurde eine sulfathaltige basische Polyaluminiumchlorid-Lösung hergestellt; allerdings wurde im Unterschied zu Beispiel 1 in der Wirbelschicht als Zwischenprodukt ein festes, basisches Aluminiumchlorid mit einer Basizität OH : Al = 2,16 : 1 erzeugt. Jeweils 6 kg dieses festen basischen Aluminiumchlorids wurden in einer unterschiedlichen Menge einer wäßrigen Schwefelsäure gelöst, wobei nach einer 2-stündigen Wärmebehandlung bei 60°C folgende basische, sulfathaltige Polyaluminiumchlorid-Lösungen entstanden:
Lösung 2a: Al³⁺ = 7,2 Gew.%, Cl⁻ = 9,9 Gew.%, SO₄²⁻ = 3,9 Gew.%, Basizität OH : Al = 1,65 : 1.

Lösung 2b: Al³⁺ = 6,0 Gew.%, Cl⁻ = 7,1 Gew.%, SO₄²⁻ = 3,3 Gew.%, Basizität OH : Al = 1,8 : 1.

Die beiden basischen sulfathaltigen Polyaluminiumchlorid-Lösungen hatten eine sehr gute Stabilität.

### Beispiel 3

Aus den nach dem erfindungsgemäßen Verfahren gemäß den Beispielen 1 und 2 hergestellten basischen sulfathaltigen Polyaluminiumchlorid-Lösungen 1, 2a und 2b wurden jeweils verdünnte Lösungen hergestellt, wobei 1 Teil Lösung mit 10 Teilen Wasser gemischt wurden. Diese verdünnten Lösungen 1, 2a und 2b wurden auf ihre Flockungseigenschaften hin nach dem sog. Jar-Test untersucht. Beim Jar-Test werden 800 ml Wasser mit 1 ml einer 5-%igen Aktivkohlesuspension versetzt. Anschließend wird das Flockungsmittel - also im vorliegenden Fall die verdünnten Lösungen 1, 2a und 2b - in einer Menge von 5 mg Al₂O₃ als aktive Flockungssubstanz bei einer Rührgeschwindigkeit > 120 Umdrehungen/Minute während einer Minute in die mit Aktivkohle versetzte Wasserprobe eingebracht. Danach wird die Mischung mit 40 Umdrehungen/Minute während 10 Minuten gerührt. Anschließend sedimentieren die Flocken innerhalb einer bestimmten Absetzzeit, wobei die suspendierte Aktivkohle mitgerissen und ausgeflockt wird. In der nachfolgenden Tabelle sind die wesentlichen Flockungseigenschaften für die verdünnten Lösungen 1, 2a und 2b angegeben. Die Tabelle zeigt, daß innerhalb kurzer Zeit eine sehr gute Resttrübung erreicht werden kann. Es kommt hinzu, daß die zur Herstellung der verdünnten Lösungen 2a und 2b verwendeten Lösungen selbst nach 100 Tagen keine Veränderungen zeigten.

**Tabelle 1**

| | verdünnte Lösungen | | |
|---|---|---|---|
| | 1 | 2a | 2b |
| Flockengröße (mm) | 2,5 | 3 | 4 |
| Absetzzeit (Minuten) | < 3 | < 2 | < 1,5 |
| Resttrübung (TE/F) | 0,14 | 0,20 | 0,15 |

Schließlich wurde festgestellt, daß bei einer Änderung des Lösungsvorgangs des festen, basischen Aluminiumchlorids in der Weise, daß in eine wäßrige Lösung des basischen Aluminiumchlorids Schwefelsäure eingebracht wird und daß anschließend eine Wärmebehandlung bei 60°C während zwei Stunden erfolgt, basische sulfathaltige Polyaluminiumchlorid-Lösungen hergestellt werden, die wesentlich schlechtere Eigenschaften haben als die Produkte, die aus dem erfindungsgemäßen Verfahren resultieren. Wenn das Ausführungsbeispiel 1 abweichend von der Erfindung so ausgeführt wird, daß die wäßrige Schwefelsäure in eine wäßrige Lösung des basischen Aluminiumchlorids eingetragen wird, resultiert eine basische, sulfathaltige Polyaluminiumchlorid-Lösung, die bei einer Verdünnung im Verhältnis von 1 : 10 nach dem Jar-Test folgende verschlechterte Flockungseigenschaften hat:
Flockengröße 0,3 mm
Absetzzeit > 10 Minuten
Resttrübung 0,22 TE/F.

## Patentansprüche

1. Verfahren zur Herstellung sulfathaltiger, basischer Polyaluminiumchlorid-Lösungen mit einer Basizität von OH zu Al von 1,05 bis 1,95 zu 1, bei dem aluminiumhaltige Stoffe mit Salzsäure aufgeschlossen werden und bei dem basisches Aluminiumchlorid und wäßrige Schwefelsäure gemischt werden, dadurch gekennzeichnet, daß der unlösliche Rückstand aus der Aufschlußlösung abfiltriert wird, daß die feststofffreie Aufschlußlösung anschließend bis zu einem AlCl₃-Gehalt von ca. 30 Gew.-% eingedampft wird, daß aus der eingedampften Aufschlußlösung durch Kristallisation AlCl₃ · 6 H₂O gewonnen wird, daß das AlCl₃ · 6 H₂O bei 150 bis 200°C durch thermische Zersetzung zu einem festen, basischen Aluminiumchlorid mit einer Basizität von OH zu Al von 1,35 bis 2,25 zu 1 umgewandelt wird, daß das feste, basische Aluminiumchlorid in wäßrige Schwefelsäure eingetragen und gelöst wird und daß schließlich die sulfathaltige, basische Aluminiumchlorid-Lösung, die eine Aluminiumkonzentration von 3 bis 10 Gew.-% aufweist, während 1 bis 3 Stunden bei 40 bis 70°C wärmebehandelt wird, wobei der Sulfatgehalt der erhaltenen Lösung 1 bis 6 Gew.-% beträgt.

2. Verfahren nach Anspruch 1, dadurch gekennzeichnet, daß als aluminiumhaltiger Stoff aluminiumhaltige Abfallprodukte verwendet werden.

3. Verfahren nach den Ansprüchen 1 oder 2, dadurch gekennzeichnet, daß das AlCl₃ · 6 H₂O einen mittleren Teilchendurchmesser d₅₀ zwischen 250 und 450 »m und eine Restfeuchte von 3 bis 10 Gew.-% aufweist.

4. Verfahren nach den Ansprüchen 1 bis 3, dadurch gekennzeichnet, daß das basische Aluminiumchlorid in Wasser gelöst wird, bevor es in die wäßrige Schwefelsäure eingetragen wird.

5. Verfahren nach den Ansprüchen 1 bis 4, dadurch gekennzeichnet, daß das feste basische Aluminiumchlorid in wäßriger Schwefelsäure oder in Wasser bei 40 bis 70°C gelöst wird.

6. Verfahren nach den Ansprüchen 1 bis 5, dadurch gekennzeichnet, daß die Aluminiumkonzentration in der sulfathaltigen, basischen Aluminiumchlorid-Lösung 5 bis 7,5 Gew.-% beträgt.

7. Verfahren nach den Ansprüchen 1 bis 6, dadurch gekennzeichnet, daß die sulfathaltige, basische Aluminiumchlorid-Lösung nach der Wärmebehandlung einen Sulfatgehalt von 2 bis 4 Gew.-% hat.

8. Verfahren nach den Ansprüchen 1 bis 7, dadurch gekennzeichnet, daß die thermische Zersetzung des AlCl₃ · 6 H₂O in einer Wirbelschicht erfolgt.

9. Verfahren nach den Ansprüchen 1 bis 8, dadurch gekennzeichnet, daß die sulfathaltige, basische Aluminiumchlorid-Lösung nach der Wärmebehandlung filtriert wird.

## Claims

1. A method for the production of sulphate-containing basic polyaluminium chloride solutions having a basicity of OH to Al of 1.05 to 1.95 to 1, in which aluminium-containing substances are decomposed with hydrochloric acid and in which basic aluminium chloride and aqueous sulphuric acid are mixed, characterised in that the insoluble residue from the decomposing solution is filtered off, that the solids-free decomposing solution is then evaporated to an AlCl₃ content of approximately 30% by weight, that AlCl₃ · 6 H₂O is obtained from the evaporated decomposing solution by crystallisation, that the AlCl₃ · 6 H₂O is converted at 150 to 200°C by thermal decomposition into a solid, basic aluminium chloride having a basicity of OH to Al of 1.35 to 2.25 to 1, that the solid, basic aluminium chloride is introduced and dissolved in aqueous sulphuric acid and that finally the sulphate-containing, basic aluminium chloride solution, which has an aluminium concentration of 3 to 10% by weight, is heat-treated for 1 to 3 hours at 40 to 70°C, the sulphate content of the resulting solution being 1 to 6% by weight.

2. A method according to Claim 1, characterised in that aluminium-containing waste products are used as the aluminium-containing substance.

3. A method according to Claims 1 or 2, characterised in that the AlCl₃ · 6 H₂O has an average particle diameter d₅₀ of between 250 and 450 »m and a residual moisture of 3 to 10% by weight.

4. A method according to Claims 1 to 3, characterised in that the basic aluminium chloride is dissolved in water before it is introduced into the aqueous sulphuric acid.

5. A method according to Claims 1 to 4, characterised in that the solid basic aluminium chloride is dissolved in agueous sulphuric acid or in water at 40 to 70°C.

6. A method according to Claims 1 to 5, characterised in that the aluminium concentration in the sulphate-containing basic aluminium chloride solution is 5 to 7.5% by weight.

7. A method according to Claims 1 to 6, characterised in that the sulphate-containing basic aluminium chloride solution has a sulphate content of 2 to 4% by weight after the heat treatment.

8. A method according to Claims 1 to 7, characterised in that the thermal decomposition of the AlCl₃ · 6 H₂O takes place in a fluidised bed.

9. A method according to Claims 1 to 8, characterised in that the sulphate-containing basic aluminium chloride solution is filtered after the heat treatment.

## Revendications

1. Procédé de préparation de solutions basiques, sulfatées de chlorure de polyaluminium, ayant une basicité de OH à Al comprise entre 1,05 à 1,95 à 1, qui consiste à dissoudre des substances aluminiques par de l'acide chlorhydrique et à mélanger du chlorure d'aluminium basique et de l'acide sulfurique aqueux, caractérisé en ce qu'il consiste à séparer par filtration le résidu insoluble de la solution de dissolution, à concentrer ensuite par évaporation la solution de dissolution exempte de matière solide jusqu'à une teneur AlCl₃ de 30% poids environ, à recueillir AlCl₃, 6H₂O par cristallisation de la solution de dissolution concentrée, à transformer le AlCl₃, 6 H₂O entre 150 et 200°C par décomposition thermique en un chlorure d'aluminium basique solide ayant une basicité de OH à Al comprise entre 1,35 et 2,25 à 1, à introduire le chlorure d'aluminium basique solide dans de l'acide sulfurique aqueux, et à l'y dissoudre et enfin à traiter thermiquement pendant 1 à 3 heures entre 40 et 70°C la solution basique sulfatée de chlorure d'aluminium qui a une concentration en aluminium de 3 à 10 % en poids, la teneur en sulfate de la solution obtenue étant comprise entre 1 et 6 % en poids.

2. Procédé suivant la revendication 1, caractérisé en ce qu'il consiste à utiliser comme substance aluminique des déchets aluminiques.

3. Procédé suivant l'une des revendications 1 ou 2, caractérisé en ce que le AlCl₃, 6 H₂O a un diamètre moyen de particules d₅₀ compris entre 250 et 450 »m et une humidité résiduelle de 3 à 10%.

4. Procédé suivant l'une des revendications 1 à 3, caractérisé en ce qu'il consiste à dissoudre le chlorure d'aluminium basique dans de l'eau avant de l'introduire dans l'acide sulfurique aqueux.

5. Procédé suivant l'une des revendications 1 à 4, caractérisé en ce qu'il consiste à dissoudre le chlorure d'aluminium basique dans de l'acide sulfurique aqueux ou dans de l'eau à une température allant de 40 à 70 C.

6. Procédé suivant l'une des revendications 1 à 5, caractérisé en ce que la concentration d'aluminium dans la solution basique sulfatée de chlorure d'aluminium est comprise entre 5 et 7,5% en poids.

7. Procédé suivant l'une des revendications 1 à 6, caractérisé en ce que la solution basique sulfatée de chlorure d'aluminium a, après le traitement thermique, une teneur en sulfate de 2 à 4 % en poids.

8. Procédé suivant l'une des revendications 1 à 7, caractérisé en ce qu'il consiste à effectuer la décomposition thermique de l'AlCl₃, 6 H₂O en lit fluidisé.

9. Procédé suivant l'une des revendications 1 à 8, caratérisé en ce qu'il consiste à filtrer la solution basique sulfatée de chlorure d'aluminium après le traitement thermique.
